# EUROPEAN PATENT APPLICATION

(11) **EP 2 324 907 A1**
(43) Date of publication of application: **25.05.2011**
(21) Application number: 09013191.3
(22) Date of filing: 20.10.2009
(51) Int. Cl.: B01D 71/02, B22F 3/11, C22C 1/04

(54) **Porous materials**

(71) Applicant: ETH Zurich, 8092 Zürich (CH)
(72) Inventor: Lüchinger, Norman A., 8037 Zürich (CH); Stark, Wendelin Jan, 8049 Zürich (CH)

(57) **Abstract**

The invention relates to porous materials as defined in claim 1, intermediates to obtain such porous materials, shaped articles containing such porous materials, uses of such shaped materials and articles, methods for manufacturing such porous materials and shaped articles.

## Description

The invention relates to nano-porous materials of metals as defined herein, intermediates suitable to obtain such porous materials, shaped articles containing such porous materials, uses of such shaped materials and articles, methods for manufacturing such porous materials and shaped articles.

Nano-porous Gold membranes are known and described e.g. in WO 2004/020064. The material described therein is obtained by a de-alloying step, i.e. the selective removal of one metal from an alloy. Due to the manufacturing process, the maximum thickness of such materials is limited and below 500 nm. Such thin materials are handled and supplied on a support, as they are not self-supporting. For certain applications, it is considered disadvantageous having such very thin materials. Due to the starting materials used, the pore size is also limited and in the range of 2 - 25 nm. Further, the manufacturing process described is considered disadvantageous, (i) as it requires the use of aggressive chemicals and (ii) as it produces porous gold membranes of limited size (in terms of length and width of the membrane).

Nano-porous Silver membranes are known and commercially available. The materials available are relatively thick (although often termed ultrathin), at least 50000 nm. Pore sizes of these membranes are in the range of 200 nm and larger. Contrary to the gold membranes discussed above, the Silver membranes available are considered (too) thick. Further, depending on the intended use, the pore sizes may be too large as well.

For other materials than Gold and Silver, no corresponding porous sheet-like materials are commercially available.

Consequently, there is a need for nano-porous materials having beneficial parameters; there is also a need for providing additional / improved manufacturing processes for nano-porous materials of metals.

Thus, it is an object of the present invention to mitigate at least some of these drawbacks of the prior art. In particular, it is an aim of the present invention to provide materials which are suitable for advanced applications, such as in fuel cells and filters.

The present invention will be described in more detail below. It is understood that the various embodiments, preferences and ranges as provided / disclosed in this specification may be combined at will. Further, depending of the specific embodiment, selected definitions, embodiments or ranges may not apply. It is further understood that all references identified herein are incorporated by reference in its entirety.

The above objectives are achieved by providing a porous material as defined in claim 1. Further aspects of the invention are disclosed in the specification and independent claims, preferred embodiments are disclosed in the specification and the dependent claims. Porous materials as described herein prove to be useful in applications as defined below and further enable the manufacture of improved articles and / or facilitate manufacture of articles as defined below.

As it will become apparent when reading this specification, the invention relates in a first aspect to nano-porous materials; in a second aspect to intermediates thereof; in a third aspect to the manufacturing thereof; in a fourth aspect to shaped articles comprising such porous materials and in a fifth aspect to uses of such porous materials and shaped articles.

Further, the present invention will be better understood by reference to the **figures.**

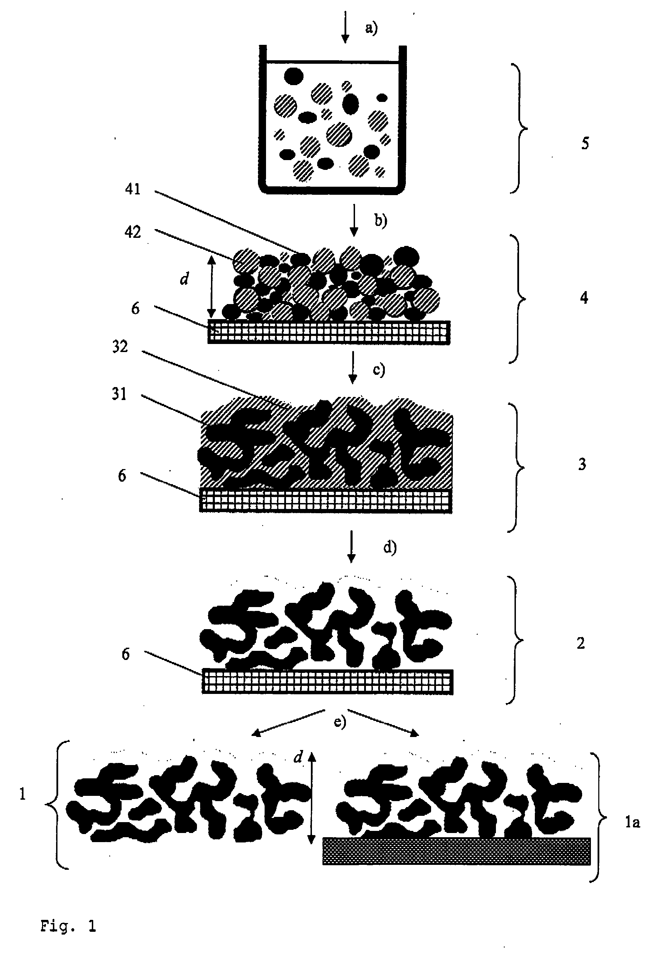

Figure 1 shows a schematic view of an inventive process according to the invention, wherein steps a) to e) are as defined herein;
(1) represents the inventive porous material, either unsupported ("free standing", left) or supported (right), the thickness d is also indicated;
(2) represents the porous metal material on a support (6);
(3) represents a bicontineous nanostructured network of a metal (31) and a salt (32) on a substrate (6);
(4) represents a metal / salt nanocomposite material in the form of a membrane comprising densely packed nanoparticles (41) and (42) on a substrate (6);
(5) represents a dispersion comprising metal nanoparticles (41) and salt nanoparticles (42).

Unless otherwise stated, the following **definitions** shall apply in this specification:
The term **"nanoparticle"** is known in the field and includes crystalline or amorphous materials. Nanoparticles are particles having a diameter in the submicron size range primary particle sizes are preferably between 10 - 100 nm, most preferred 20 - 50 nm of an agglomerate size (secondary particles) measured as hydrodynamic particle size distributions below 200 nm. Suitable methods for the determination of primary particle sizes and agglomerate diameter can be found by Limbach et al. (Environmental Science & Technology, 2005. 39(23): p. 9370-9376).

The terms **"semi-noble metal"** and **"noble metal"** are known in the field. The inventive materials may contain one or more such metals (alloys); preferably one metal. The metal(s), either alone or in an alloy, have a standard potential between 0.00 and +1.50 V as defined in Riedel et al (Anorganische Chemie. 1999, Walter de Gruyter: New York). Gold is the most electro-positive metal within the context of the present invention. Noble metals include Au, Pt, Ir, Pd, Os, Ag, Rh, Ru; in particular Ag, Au, Pt. Semi-noble metals include Cu, Tc, Re, Sb, Bi, Po. Alloys includes Ag-Au, Ag-Pt, Pt-Au, Pt-Rh.

The term **"salt"** is known in the field. A salt is defined as the product formed from the neutralisation reaction of acids and bases. Salts are ionic compounds composed of cations and anions so that the product is electrically neutral. Examples of salt classes are halogenides (chlorides, fluorides, bromides, iodides) sulfates, phosphates, carbonates, nitrates, particularly phosphates, carbonates and halogenides. In inorganic salts, the cation is a metal ion and the anion is a non-metal ion; specific examples of inorganic salts include calciumphosphate, calciumcarbonate, magnesiumsulfate, sodiumchloride. In the context of the present invention, metal oxides are not considered salts. Further, salts are preferably manufactured by FSP.

The **"specific surface area"** of a material as described herein is the total air-metal interface area per amount of metal mass. This may be determined by nitrogen adsorption using the BET method (according to: Janssen et al, Journal of Applied Polymer Science 52, 1913, 1994). The BET method is widely used in surface science for the calculation of surface areas of solids by physical adsorption of gas molecules (e.g. Nitrogen molecules). The basic principle of the measurement is that a material with a high surface area can adsorb more molecular nitrogen on its surface (assuming a molecular monolayer).

The **"porosity"** of a material as described herein is the volumetric percentage of pores of the total material. Porosity can be determined by porosimetry, by measuring the apparent material density or by microscope images.

In general terms, the present invention relates in a **first aspect** to a porous material, said material (i)is selected from the group consisting of noble-metals, semi-noble metals and alloys thereof; (ii) has pores with a diameter between 10 - 1000 nm; (iii) has a specific surface area of 0.5 - 10 m²/g and (iv) has a thickness of 1 - 100 µm. Due to the unique manufacturing process, as outlined below, the present invention provides nanoporous metal membranes / foils combining specific porosity and thickness. The inventive material proves to be useful in a number of applications, including filter materials, electrode materials and catalytically active materials. This aspect of the invention shall be explained in further detail below.

**Metals:** The invention relates to sheet materials consisting of metals as defined above. This includes metals in all available purity grades. In one embodiment, said metal is selected from the group consisting of noble metals and alloys thereof. In a further embodiment, said metal is selected from the group consisting of semi noble metals and alloys thereof.

**Pores:** As outlined above, the inventive material is porous. The inventive material is characterized by the size, type and amount of pores present. The size and type and amount of pores may be influenced by the starting materials, the ratio metallic : salt nanoparticles, the manufacturing process (as explained below).
Size: The size of the pores is defined by the diameter, which is in the nanoscale range, typically between 10 - 1000 nm, preferably 20 - 200 nm. The size of the pores may be determined by microscopy.
Type: The pores of the material may be arranged in a way that the material is permeable, partly permeable or impermeable. If essentially all pores of the material have dead ends, the material is impermeable. In the contrary, if essentially all pores of the material have open ends, the material is considered permeable. Consequently, if a fraction of the pores has dead ends, the material is considered partly permeable.
Amount: The porosity, i.e. the volume of pores in relation to the volume of the porous materials in total, may be varied in a broad range. Inventive materials show a porosity in the range of 20 - 80 %, preferably above 30 %, much preferred above 40 %.

**Specific Surface Area:** The term is known in the field and further defined above.

**Thickness:** The invention relates to materials which are relatively thin, particularly having a thickness between 1 - 100 µm. Such materials may also be termed "sheet material", "foil" or "membrane"; these terms indicate that the material has a length and width which is at least one magnitude larger (preferably two magnitudes larger) than the thickness of the material. Further, the term membrane indicates that such material is permeable with respect to at least one entity, such as a gas or a liquid; the term foil indicates that such material is impermeable at least with respect to one entity. The term sheet material includes both, non-permeable materials ("foils") and permeable materials ("membranes").

In one embodiment the present invention relates to a porous material as described herein which is a sheet material.

In a further embodiment, the invention relates to porous material as described herein which is a foil, particularly a foil which is impermeable to biologic material, including bacteria, viruses, cells, and to inorganic material, including nanoparticles.

In a further embodiment, the invention relates to porous material as described herein which is a membrane, particularly a membrane which is permeable to liquids, (including water), gases (including air), and dissolved material (including metal ions and proteins).

The present invention relates in a **second aspect** to intermediates which are useful for the manufacture of a porous material as defined herein. This aspect of the invention shall be explained in further detail below:

In one embodiment, the invention relates to a dispersion (5) containing (i.e. comprising or consisting of) (i) 1 - 50 wt% nanoparticles selected from the group consisting of noble metals, semi-noble metals or alloys thereof; (ii) 1 - 50 wt% nanoparticles being selected from the group of salt materials; (iii) 50 - 97 wt% dispersing medium; (iv) optionally 0.06 - 10 wt% surfactants. Such dispersions are suitable starting materials for the inventive process as described below.
Dispersing medium: Any liquid carrier suitable for dispersing the nanoparticles may be used; preferred is water. Surfactants: Suitable surfactants are known in the field and include amphiphilic tensides, polymers with functional groups, and thiol-functionalised molecules.
Examples of useful surfactants for water-based compositions include: Dodecanethiol, Disperbyk, Disperbyk-190, Disperbyk-180, Disperbyk-190, Disperbyk-170, Disperbyk-140, BYK-154, BYK-162, BYK-180, BYK-181, BYK-190, BYK-192, BYK-333, BYK-348, SMA 1000NA, SMA 1000H, SDS, AOT, Tamol, T1124, Tween 20, Tween 80, L-77, Betaine, Sodium Laureth Sulfosuccinate and Sulfate, Tego 735W, Tego 740 W, Tego 750 W, Disperbyk, PDAC (poly(diallyldimethylammonium chloride)), Nonidet, CTAC, Daxad 17 and 19 (sodium salt of naphthalene sulfonate formaldehyde condensate), BASF 104, Solspers 43000, Solspers 44000, Atlox 4913, PVP K-30, PVP K-15, Joncryl 537, Joncryl 8003, Ufoxan, STTP, CMC, Morwet, LABS W-100A, Tamol 1124. It was found that surfactants increase the stability of the dispersion and thus facilitate the following manufacturing steps.
Nanoparticles: The manufacture of suitable nanoparticles is known in the field. It was found that nanoparticles made by a dry process, such as an FSP process, are particularly suitable. It is considered particularly beneficial, if both types of nanoparticles were manufactured simultaneously in one process, e.g. in one FSP process.
Water: the amount of water may vary over a broad range, depending on the intended following manufacturing step (coating or printing).

In a further embodiment, the invention relates to a material (4) comprising a support and a coating, wherein (i) said coating contains a first group of nanoparticles selected from the group consisting of noble metals, semi-noble metals or alloys thereof and (ii) said coating contains a second group of nanoparticles being selected from the group of salt materials and (iii) said first and second group of nanoparticles are randomly distributed and densely packed at the nanometer scale and (iv) said coating having a thickness between 1 - 100 µm.
The material (4) may be obtained by coating / printing dispersion (5) on a substrate (6), optionally followed by removing the above mentioned dispersing medium. Substrate: The support may be any support compatible with the manufacturing process; particularly, it needs to be thermally stable and chemically inert. It is further beneficial, if the coating adheres to the support during manufacturing and can be removed after manufacturing. Suitable materials for a support include polymer materials, glasses, metals and ceramics (in each case coated or uncoated). For polymers, amorphous polymers with a glass transition temperature above 150°C are preferred. Further, polymers which are soluble in a solvent are advantageously used.

In a further embodiment, the invention relates to a material (3) comprising a support (6) and a coating (31), wherein said coating consist of a first continuous network of a noble metal, semi-noble metal or alloy thereof and a second continuous network of a salt material which interpenetrates the first network.

In a further embodiment, the invention relates to a material (2), comprising a support (6) and a coating, wherein said coating consists of a porous material as described herein.

The present invention relates in a **third aspect** to methods of manufacturing the porous material as defined herein and to methods of manufacturing the intermediates as defined herein. This aspect of the invention shall be explained in further detail below:

In one embodiment, the invention provides a method of manufacturing a porous material as described herein comprising the step of subjecting a shaped article (3) (containing support (6) and coating (31)(32)) to a dissolution step d) and optionally removing from the thus obtained article said support (step e). The dissolution step d) aims to remove all or essentially all salt material (32) from said article (3). The removal step e) aims to remove support (6) to obtain an unsupported porous material or to transfer the porous material to another supporting material to obtain a coated article. It is believed that the dissolution step is a key element of the manufacturing process and also a key element to obtain the inventive porous material. While the prior art uses as a starting material a combination of two metals of which one is selectively removed (de-alloying), the present invention uses as a starting material a combination of a metal and a salt and selectively removes the salt to obtain the porous material. This is considered advantageous, as chemical properties of salts and metals significantly differ enabling a wide choice of combinations and process steps.

In a further embodiment, the invention provides a method of manufacturing a porous material as described herein comprising the steps of (a) providing a dispersion containing metal and salt nanoparticles; (b) coating a supporting material with said dispersion; (c) subjecting the obtained material to a heat treatment step (particularly sintering); (d) subjecting the obtained shaped article to a dissolution step; (e) optionally removing the support. The individual steps shall be explained in further detail below:
Step a: A stable concentrated dispersion containing a mixture of metal nanoparticles and salt nanoparticles is provided first.
Step b: The dispersion of step a) is applied to a substrate, e.g. by using conventional printing or coating methods. This results in metal/salt nanocomposite films on said substrate. This step may be repeated to obtain the desired thickness of the film; e.g. several subsequent printing or coating cycles are applied, optionally with an intermim drying step.
Step c: Afterwards the nanocomposite films are subjected to a heat treatment (e.g. sintering) to obtain a bicontinuous nanostructured network of the metal and salt. The temperatures and treatment times may vary, depending on the starting materials and the aimed porosity and are typically above 150°C and below the melting temperature of the metal / alloy. It is an advantage of the starting material, that sintering temperatures are comparatively low; thus substrates (6) may also be selected from the group of polymer materials.
Step d: The continuous salt phase in such nanocomposite membranes is dissolved which results in a nano-porous metal membrane on a substrate. Suitable are particularly water or acidic aqueous solutions. The choice of solvent particularly depends on the type of salt material used.
Step e: The substrate may be easily removed from the porous material, e.g. by pealing off or by dissolving the substrate. If the substrate is dissolved, suitable solvents include organic solvents that dissolve the substrate. Alternatively, the porous material may be transferred to another substrate using known processes.

In an advantageous embodiment, the invention provides a method of manufacturing a porous material as described herein wherein one or more, preferably all steps b) to e) are adapted to a continuous process.

The manufacturing processes as described herein are considered advantageous, as the individual steps a) to e) are known in industry and already in commercial use. Further, the process described avoids the use of hazardous or aggressive chemicals.

The manufacturing process described provides porous materials in virtually unlimited size. As the manufacturing steps a) to e) do not provide a limitation regarding the size of the material (except for the equipment used) large sheet materials, in terms of length and width, are obtainable. The invention thus also relates to materials as disclosed herein with an area of more than 100cm2, preferably more than 400 cm2.

In a further embodiment the invention relates to a porous material obtainable by or obtained by a method as described herein.

The present invention relates in a **forth aspect** to shaped articles containing (i.e comprising or consisting of) porous material as described herein. A wide variety of articles may be equipped with the inventive porous material. This aspect of the invention shall be explained in further detail below:

In one embodiment, the shaped article is selected from the group consisting of filters and electrodes.

In a further embodiment, the shaped article comprises a support and a coating, preferably a top coating, wherein said coating consists of a porous material as defined herein.

In a further embodiment the invention relates to an article obtainable by or obtained by a method as described herein.

The present invention relates in a **fifth aspect** to uses / methods of use of the shaped article as described herein. In general, the inventive articles retain the beneficial properties of the porous materials as defined herein and are thus suitable for all uses that are applicable to such materials; this particularly includes the uses as disclosed herein.

In one embodiment, the present invention relates to the use of an article as described herein as a membrane, particularly as a membrane filter (particularly for the filtration of gases or liquids) or electrochemical membrane electrode.

In a further embodiment, the present invention relates to the use of an article, particularly a membrane, as defined herein (i) in a fuel cell; (ii) in a filter; (iii) in a battery.

To further illustrate the invention, the following **examples** are provided. These examples are provided with no intend to limit the scope of the invention. The examples provided consist of the following steps: i) Preparation of the starting materials, i.e. metal and salt nanoparticles and corresponding dispersion and ii) preparation of a membrane including application of the ink on a surface and Formation of the nano-porous structure

### I. Preparation of starting materials

The preparation of the metal and salt nanoparticles is described in WO2004005184 and WO2005087660 which are incorporated by reference. The procedures outlined in these documents are adhered to. In summary, a stable precursor containing calcium and silver is fed to a nozzle (9 ml/min) and dispersed by an oxygen jet (9 1/min, Pan Gas) in a flame. This preparation procedure causes the formation of calcium carbonate nanoparticles and separately formed metallic silver nanoparticles. Under these conditions noble metals can be produced in their reduced state whereas calcium forms the corresponding salt. A suitable composition of a metal and salt nanoparticle mixture is Silver / Calcium carbonate (80 wt% Ag, denoted as Ag80-CaCO3).

Nanoparticles suitable in the context of the present invention may also be obtained from a range of other preparation methods, not limited to high temperature-gas phase (reducing flame synthesis, laser and plasma processes) processes, such as liquid phase chemical methods. It is also possible to start from separate nanopowders of metal nanoparticles and salt nanoparticles.

### II. Preparation of the nano-porous metal membrane.

Step a) A dispersion was prepared consisting of 20 wt% Ag80-CaC03 in deionized water and 5 wt% Disperbyk 190 (BYK-Chemie) relative to the total amount of nanoparticles. The dispersion was prepared by manually mixing the dispersing agent with deionized water (Millipore, electrical resistivity > 18 MΩcm), then adding the mixture of silver and calcium carbonate nanoparticles (Ag80-CaCO3). The nanoparticles were dispersed by ultra-sonication (Hielscher Ultrasonics UP400S, 80% intensity, 0.5 cycle) for 5 minutes. The dispersion was further filtered by a syringe filter (Sartorius Minisart, 5 µm).

Step b) The dispersion was applied on a 10 micron thick PSU polymer foil supported on a glass substrate by roll coating (Zehntner ZAA 2300, 50 µm-roller). The coating cycle was repeated 3 times, resulting in a dry coating thickness of about 3 µm.

Step c) After drying at ambient conditions the glass substrate containing the PSU foil and the coating were placed in an oven at 170°C for 15 min. Afterwards the PSU foil was detached from the underlying glass substrate resulting in a thin and flexible polymer foil containing the silver/calcium carbonate coating.

Step d) Then the PSU foil was placed for 5 min in a bath with 1% HC1 in order to dissolve the calcium carbonate phase. The resulting nano-porous silver membranes still adhered to the supporting PSU foil which could be transferred to a stainless steel mesh (BOPP, mesh size 5 µm).

Step e) After dissolution of the supporting PSU foil by dichloromethane the nano-porous silver membrane was transferred to the stainless steel mesh. The obtained nano-porous silver membrane showed the following characteristics: thickness: 3 µm; porosity: 50 vol%; BET: 5 m²/g.

Silver-Calcium carbonate films were also produced by the use of other surfactants and other silver-to-calcium carbonate ratios as listed in the following table:

| Surfactant | Surfactant concentration relative to total amount of nanoparticles | Silver concentration in total amount of nanoparticles | Total particle concentration in dispersion |
|---|---|---|---|
| PVP | 10 wt% | 80 | 10 wt% |
| SDS | 10 wt% | 80 | 7 wt% |
| SMA 1000 H | 7 wt% | 80 | 7 wt% |
| DB 190 | 5 wt% | 68 | 20 wt% |
| DB 190 | 5 wt% | 55 | 20 wt% |
| DB 190 | 5 wt% | 39 | 20 wt% |

The obtained nano-porous silver membranes showed characteristics comparable to the data provided above.

## Claims

1. A porous material (1), said material
■ being selected from the group consisting of noble-metals, semi-noble metals and alloys thereof;
■ having pores with a diameter between 10 - 1000 nm;
■ having a specific surface area of 0.5 - 10 m²/g and
■ having a thickness d of 1 - 100 µm.

2. The porous material according to claim 1 wherein said pores are permeable, partly permeable or impermeable.

3. The porous material according to any of claims 1 to 2 which is selected from the group consisting of semi noble metals and alloys thereof.

4. The porous material according to any of claims 1 to 2 which is selected from the group consisting of noble metals and alloys thereof.

5. A material (2), comprising a support (6) and a coating, wherein said coating consists of a porous material according to any of claims 1 to 4.

6. A material (3), comprising a support (6) and a coating, wherein said coating consists of a first continuous network of a noble metal, semi-noble metal or alloy thereof (31) and a second continuous network of a salt material which interpenetrates the first network (32).

7. A material (4), comprising a support (6) and a coating, wherein
■ said coating contains a first group of nanoparticles (41) selected from the group consisting or noble metals, semi-noble metals or alloys thereof;
■ said coating contains a second group of nanoparticles (42) selected from the group of salt materials;
■ said first and second group of nanoparticles are randomly distributed and
■ said coating having a thickness (d) between 1 - 100 µm.

8. A dispersion (5) comprising
■ 50 - 97 wt% water
■ 1 - 50 wt% nanoparticles (41) selected from the group consisting of noble metals, semi-noble metals or alloys thereof
■ 1 - 50 wt% nanoparticles (42) being selected from the group of salt materials
■ 0.06 - 10 wt% surfactants, preferably selected from the group consisting of amphiphilic tenside groups, polymers with functional groups and thiol-functionalised molecules.

9. A method of manufacturing a porous material according to any of claims 1 to 4 comprising the step of subjecting a material as defined in claim 6 to a dissolution step and optionally removing from the thus obtained material said support.

10. A method of manufacturing a porous material according to any of claims 1 to 4 comprising the steps of
a. providing a dispersion (5) as defined in claim 8;
b. coating a supporting material (6) with said dispersion;
c. subjecting the obtained material (4) to a heat treatment;
d. subjecting the obtained shaped article (3) to a dissolution step;
e. optionally removing the support material (6).

11. A shaped article containing a material according to any of claims 1 to 4, particularly a filter or an electrode.

12. The shaped article of claim 11 comprising a support and a coating, preferably a top coating, wherein said coating consists of a porous material as defined in any of claims 1 to 4.

13. Use of an article according to any of claims 11 to 12 as a membrane.

14. The use of claim 13 in a filter, in a fuel cell or in a battery.

15. An article obtainable by, or obtained by, a method according to claim 9 or 10.
